# EUROPÄISCHE PATENTANMELDUNG

(11) **EP 0 933 734 A1**
(43) Veröffentlichungstag der Anmeldung: **04.08.1999**
(21) Anmeldenummer: 98810070.7
(22) Anmeldetag: 02.02.1998
(51) Int. Cl.: G07F 9/10, G07F 11/68, A47J 37/12

(54) **Vorrichtung zum portionenweisen Zubereiten warmer Nahrungsmittel**

(71) Anmelder: Daleson Trading Co. Ltd., 6330 Cham/ZG (CH)
(72) Erfinder: Saint Martin, Bruno, 56610 Arradon (FR); Kenk, Ernst, 75011 Paris (FR); Schweitzer, Andreas, 7019 Fidaz (CH)
(74) Vertreter: Münch, Otto, Dipl.-Ing.

(57) **Zusammenfassung**

Die Vorrichtung ist vorzugsweise als Verkaufsautomat für Pommes frites, Pommes Chips, Chicken Nuggets usw. ausgebildet. Sie umfasst einen Vorrat (17), vorzugsweise in Form eines aufgewickelten Bandes (16) von aneinanderhängenden Portionenpackungen (12) fertig zubereiteter Nahrungsmittelprodukte (13). Die Packungen (12) werden mittels einer Transporteinrichtung (23) einer Entnahmestelle (27) zugeführt. Eine Trenneinrichtung (38) dient zum Öffnen der Packung (12) an der Entnahmestelle (27), worauf die Produkte (13) auf einen Rost (48) fallen, mittels welchem sie in einen Ofen (56) geschoben werden. Nach dem Erwärmen wird der Rost (48) zurückgezogen und abgeschwenkt, so dass die Produkte (13) durch einen Trichter (58) in einen auf einem Drehteller (59) bereitgestellten Becher (61) fallen. Der Tisch (59) dreht den gefüllten Becher (61) vor eine Entnahmeöffnung (66). Die Vorrichtung ermöglicht es, automatisch in kurzer Zeit frische Produkte portionenweise zuzubereiten.

## Beschreibung

Pommes frites werden üblicherweise batchweise fritiert und nach dem Fritieren warm gehalten und manuell in Einzelportionen abgegeben.

Der vorliegenden Erfindung liegt die Aufgabe zugrunde, eine Vorrichtung zum automatischen portionenweisen Zubereiten warmer Nahrungsmittel anzugeben. Diese Aufgabe wird durch die Merkmalskombination der Ansprüche gelöst.

Nachfolgend werden Ausführungsbeispiele der Erfindung anhand der Zeichnungen erläutert. Darin zeigt:
- Figur 1: eine schematische Darstellung eines Verkaufsautomaten,
- Figur 2: eine perspektivische Ansicht des Messers, und
- Figur 3: eine Variante der Ausführungsform nach Figuren 1 und 2.

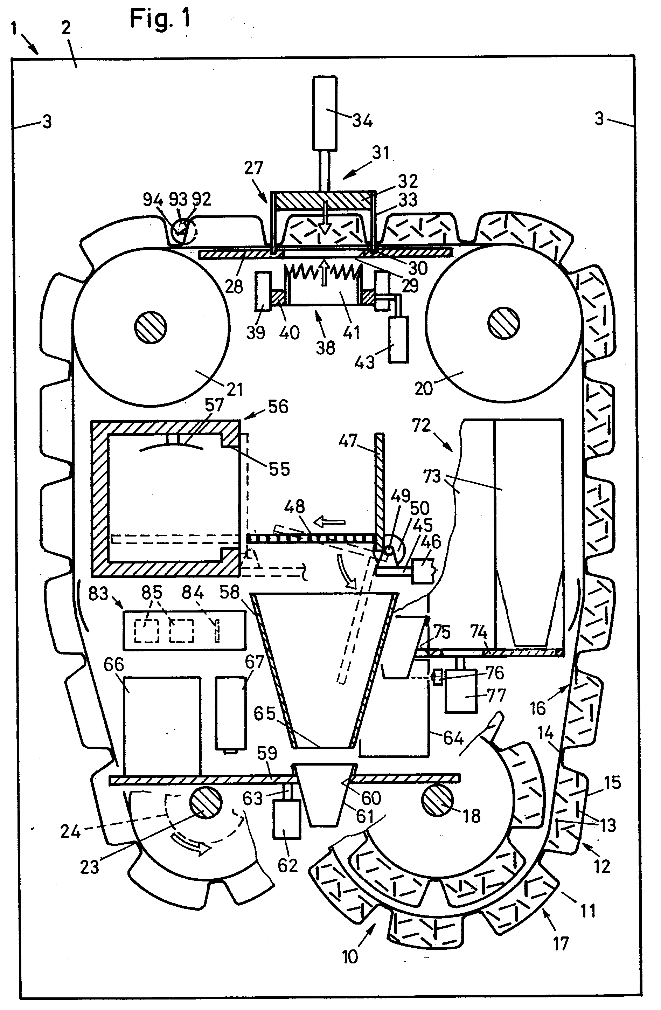

In Figur 1 ist ein Verkaufsautomat 1 für Pommes frites schematisch dargestellt. Der Automat hat eine Frontwand 2, zwei Seitenwände 3 und eine Tür als Rückwand. Eine Vorratseinrichtung 10 enthält einen Vorrat 11 von Packungen 12, welche fertig fritierte Pommes frites 13 enthalten. Die Packungen 12 bestehen aus zwei langgestreckten Bändern 14, 15 aus Verbundfolie, die gasdicht ist. Das Band 15 hat schalenförmige Vertiefungen und ist längs deren Rand mit dem Band 14 versiegelt. Das Abfüllen und Versiegeln der Packungen 12 erfolgt in einer Inertgas-Atmosphäre, so dass die verpackten Pommes frites 13 mehrere Monate bei Raumtemperatur haltbar sind. Das aus den Bändern 14, 15 gebildete Verpackungsband 16 ist zu mindestens einer Vorratsrolle 17 aufgewickelt, die auf einen Dorn 18 aufgesteckt ist. Das Band 16 ist über zwei horizontale Umlenkwalzen 20, 21 zu einem Aufwickelkern 23 geführt, welcher durch einen Motor 24 angetrieben ist.

Zwischen den Walzen 20, 21 ist das Band 16 mit seiner flachen Unterseite über eine ebene Platte 28 geführt. Die Platte 28 hat eine rechteckige Öffnung 29 an einer Entnahmestelle 27. Die Öffnung 29 hat annähernd die Grösse der schalenförmigen Vertiefungen im Band 15. Die Platte 28 hat um die Öffnung 29 herum eine umlaufende Nut 30, in welche ein Niederhalter 31 eingreift. Dieser besteht aus einer vertikal beweglich geführten, rechteckigen Platte 32, an deren Ränder vier einen Rahmen bildende Bleche 33 befestigt sind. Der Niederhalter 31 wird mittels eines Huborgans 34 bewegt, welcher als Zylindereinheit dargestellt ist. Durch das Einklemmen des Randes der Packungen 12 in der Nut 30 wird ein sicherer Halt der Packungen 12 für den Öffnungsvorgang erreicht.

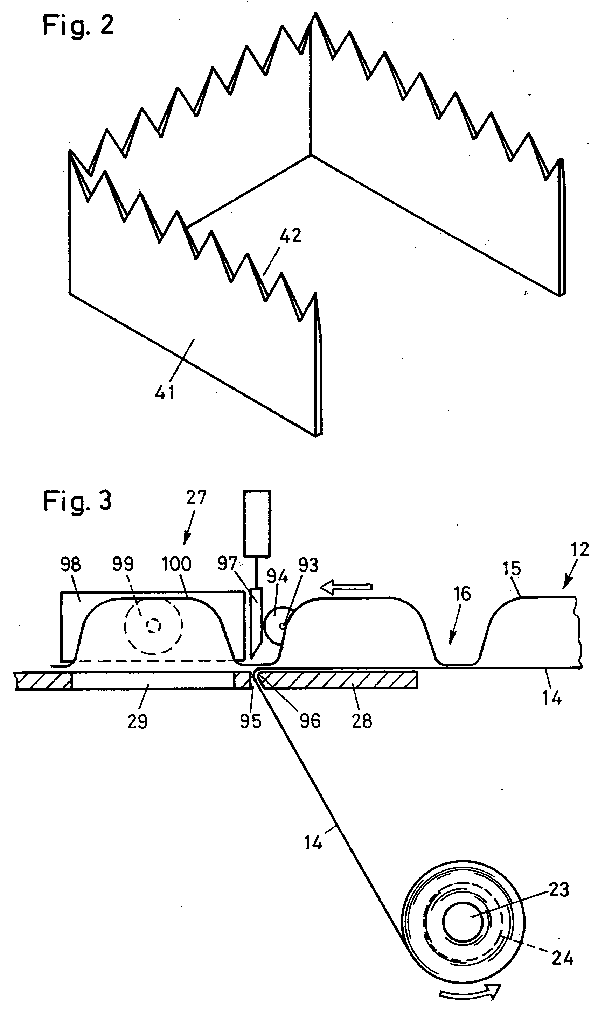

Unterhalb der Öffnung 29 ist eine Trenneinrichtung 38 angeordnet, die einen in Vertikalführungen 39 verschiebbaren Schlitten 40 umfasst. Am Schlitten 40 ist ein U-förmig abgekantetes Messer 41 mit einer gezackten Schnittkante 42 (Figur 2) befestigt. Der Schlitten 40 wird durch ein weiteres Huborgan 43 bewegt.

Unterhalb der Öffnung 29 und der Trenneinrichtung 38 ist ein Schieber 45 angeordnet, der aus einer gestrichelt dargestellten Grundstellung in die mit ausgezogenen Linien dargestellte ausgerückte Stellung horizontal verschiebbar ist. Der Schieber 45 wird durch ein weiteres Hubelement 46 betätigt. Er umfasst eine vertikale Platte 47 und einen horizontalen Rost 48, z.B. ein Gitter. Zumindest der Rost 48 ist aus der horizontalen Grundstellung um eine horizontale Achse 49 mittels eines Motors 50 nach schräg unten schwenkbar.

Statt der dargestellten motorisch schwenkbaren Lösung kann der Rost 48 in seiner horizontalen Lage auch durch einen Elektromagneten gehalten sein. Beim Rückziehen des Schiebers 45 in die ausgerückte Stellung wird dabei der Elektromagnet kurzfristig ausgeschaltet, so dass der Rost 48 nach unten klappt. Bei der Verschiebung des Schiebers 45 in die Endlage läuft eine Rolle, welche an einem am Rost befestigten Arm gelagert ist, auf einer stationären Kurvenscheibe auf und schwenkt den Rost wieder in die horizontale Stellung zurück, in welcher er vom inzwischen wieder eingeschalteten Elektromagneten gehalten wird.

In der Grundstellung verschliesst die Platte 47 eine rechteckige Öffnung 55 eines Ofens 56, der Halogen-Heizelemente 57 enthält. In der ausgerückten Stellung des Schiebers 45 ist unterhalb des Rostes 48 ein nach unten verengter Trichter 58 angeordnet. Unterhalb des Trichters 58 befindet sich ein Drehtisch 59 mit einer Öffnung 60 zur Aufnahme eines Bechers 61. Der Tisch 59 ist mittels eines Motors 62 um eine vertikale Achse 63 in mindestens drei Stellungen drehbar. In der ersten Stellung ist die Öffnung 60 senkrecht unterhalb eines Zufuhrschachtes 64 für die Zufuhr eines Bechers 61, in einer zweiten Stellung senkrecht unterhalb der Mündung 65 des Trichters 58 und in einer dritten Stellung vor einer Entnahmeöffnung 66 in der Frontwand 2. Vor der dritten Stellung kann der Tisch allenfalls noch an weiteren Stationen mit Dosiergeräten 67 für die Zudosierung von Gewürzen, z.B. Ketchup, Mayonnaise oder Salz, angehalten werden.

Die Becher 61 werden dem Schacht 64 von einem Bechermagazin 72 in bekannter Weise zugeführt. Das Magazin 72 ist um eine vertikale Achse drehbar und hat über den Umfang verteilt mehrere Rohre 73, die unten durch eine stationäre Platte 74 verschlossen sind. Die Platte 74 hat am oberen Ende des Schachtes 64 eine Durchgangsöffnung 75 und eine nicht dargestellte, an sich bekannte Einrichtung zur Abgabe jeweils eines einzelnen Bechers 61. Ist das betreffende Rohr 73 leer, was z.B. mittels einer Lichtschranke 76 feststellbar ist, dreht das Magazin 72 mittels eines Motors 77 einen Schritt weiter, so dass das nächste gefüllte Rohr 73 mit der Öffnung 75 fluchtet.

In der Frontwand kann zusätzlich eine Bedienungseinheit 83, z.B. mit einem Münzeinwurfschlitz 84 oder einem Kartenleser und Bedienungsknöpfen 85, angeordnet sein. Mit den Knöpfen können z.B. zusätzlich gewünschte Würzungen vorgewählt werden.

Der beschriebene Automat funktioniert wie folgt: In der Grundstellung ist der Ofen 56 geschlossen und die Heizelemente 57 sind ausgeschaltet. Der Niederhalter 31 ist abgesenkt und der Schieber 40 in der unteren Stellung. Wird der entsprechende Münzenbetrag eingeworfen, was durch einen Münzenprüfer kontrolliert wird, so fährt zunächst der Schieber 45 aus und anschliessend der Schieber 40 hoch, so dass die Folie 14 der betreffenden Packung 12 an drei Seiten durchschnitten wird und als Lappen an der vierten, offenen Seite des Messers 41 herunterhängt. Die Pommes frites 13 fallen auf den Rost 48. Der Schieber 45 fährt in die Grundstellung und die Heizelemente 57 werden eingeschaltet. Die Heizzeit beträgt bloss etwa 30 Sekunden bis 2 Minuten. Nach einer eingestellten Verzögerung fährt der Schieber 45 wieder aus und der Motor 50 schwenkt den Rost 48, so dass die fertigen Pommes frites in den inzwischen aus dem Magazin 72 über den Schacht 64 auf den Tisch 59 angelieferten und unter die Mündung 65 geschwenkten Becher 61 fallen. Anschliessend dreht der Tisch 59, allenfalls mit Zwischenhalt bei einem der Dosiergeräte 67, den Becher vor die Entnahmeöffnung 66, wo er entnommen wird. Sobald die Packung 12 entleert ist, wird der Niederhalter 31 angehoben und der Motor 24 eingeschaltet, so dass das Band 16 vorgezogen wird, bis die Vorderfront 92 der eben entleerten Packung 12 den Strahl 93 einer Lichtschranke 94 unterbricht, was den Motor 24 stoppt und die Absenkung des Niederhalters 31 veranlasst.

Mit dem beschriebenen Automaten können in kurzer Zeit Einzelportionen von frischen Pommes frites, Pommes Chips, Chicken Nuggets usw. von hervorragender Qualität zubereitet werden.

Figur 3 zeigt eine zweite Ausführungsform, die sich vor allem in Fällen eignet, wo die Folie des Bandes 14 relativ leicht von jener des Bandes 15 abgeschält werden kann, also bei relativ schwacher aber immer noch luftdichter Versiegelung. Das Messer 41 mit seiner Betätigung sowie der Niederhalter 31 sind weggelassen. Dafür hat die Platte 28 unmittelbar stromaufwärts der Öffnung 29 einen Schlitz 95, durch welchen die Folie 14 allein mittels des Dorns 23 über eine abgerundete Kante 96 abgezogen wird. Ein vertikal bewegliches Messer 97 schneidet das Band 16 am Schlitz 95 entzwei, sobald die Lichtschranke 94 angesprochen und den Motor 24 gestoppt hat. Der Motor 24 wird erst wieder eingeschaltet, wenn die nächste Portion zubereitet werden soll. Hierauf stösst ein Stössel 98 mittels eines Hubelementes 99 die nun leere Schale 100, welche durch die Vertiefungen des Bandes 15 gebildet ist, seitlich von der Platte 28 in einen nicht dargestellten, gekrümmten, im Querschnitt rechteckigen Schacht, durch welchen die Schale 100 um 180° gedreht wird und in die entsprechend rechteckig ausgebildete Öffnung 60 des Tisches 59 fällt. Die Schale 100 dient also gleichzeitig als Ausgabebehälter. Das Magazin 72 und der Schacht 64 mit der entsprechenden Drehstellung des Tisches 59 entfallen. Diese Variante hat vor allem den Vorteil, dass sie einfacher aufgebaut ist und weniger Abfall produziert wird. Sie erfordert allerdings eine etwas grössere Foliendicke des Bandes 15.

Abweichend von den dargestellten Ausführungsformen können die Schalen 100 auch unzusammenhängend, also lose, von einem Magazin 10 zugeführt werden. Die in Figur 1 dargestellte Schneideinrichtung 38 muss in diesem Fall noch ergänzt werden durch eine Einrichtung zum Abreissen oder Abtrennen des herunterhängenden Lappens 101 der dem Band 14 entsprechenden Sigelfolie.

## Patentansprüche

1. Vorrichtung zum portionenweisen Zubereiten warmer Nahrungsmittel (13), insbesondere Verkaufsautomat für Pommes fri-tes, Pommes Chips oder Chicken Nuggets, umfassend
- eine Vorratseinrichtung (10) zur Aufnahme eines Vor-rats (17) von in individuellen Packungen (12) verpackten, fertig zubereiteten Portionen des Nahrungsmittels (13),
- eine Transporteinrichtung (23) zur Zufuhr je einer Pakkung (12) zu einer Entnahmestelle (27),
- eine Trenneinrichtung (38, 95) an der Entnahmestelle (27) zum Öffnen der Packung (12),
- eine Verschiebeeinrichtung (45) mit einem Rost (48) unterhalb der Entnahmestelle (27), wobei der Rost (48) aus einer ersten Stellung senkrecht unterhalb der Entnahme-stelle (27) in eine zweite Stellung innerhalb eines Ofens (56) verschiebbar ist und der Rost (48) an der Verschiebeeinrichtung (45) um eine im wesentlichen horizontale Achse (49) schwenkbar ist,
- einen Trichter (58) unterhalb des Rostes (48) in dessen erster Stellung, und
- ein Tragorgan (59), das einen Ausgabebehälter (61, 100) von einer ersten Stellung unterhalb des Trichters (58) in eine Stellung vor einer Entnahmeöffnung (66) verschiebt.

2. Vorrichtung nach Anspruch 1, wobei die Packungen (12) als ein Band (16) aus Thermoplast-Verbundfolien und der Vorrat (17) als mindestens ein Wickel dieses Bandes (16) ausgebildet sind, und wobei die Transporteinrichtung einen Aufwickelkern (23) für mindestens einen Teil der entleerten Packungen (12) umfasst.

3. Vorrichtung nach Anspruch 2, wobei benachbart der Entnahmestelle (27) eine Lichtschranke (94) zum Erfassen der Stirnfront (92) einer der Packungen (12) angeordnet ist.

4. Vorrichtung nach einem der Ansprüche 1 bis 3, wobei die Packungen (12) Schalen (100) sind, welche durch eine Folie (14) verschlossen sind, und wobei vorzugsweise die Schalen (100) nach dem Entleeren in der Entnahmestelle (27) als Ausgabebehälter eingesetzt werden.

5. Vorrichtung nach einem der Ansprüche 1 bis 4, wobei die Trenneinrichtung (38) ein U-förmig abgekantetes Messer (41) mit gezackter Schneide (42) umfasst.

6. Vorrichtung nach einem der Ansprüche 1 bis 5, wobei die Entnahmestelle (27) einen rahmenförmigen Niederhalter (31) umfasst, der einen Rand der Packungen (12) gegen eine Platte (28) drückt, welche innerhalb des Niederhalters (31) eine Öffnung (29) aufweist, durch welche die Trenneinrichtung (38) die betreffende Packung (12) öffnet.

7. Vorrichtung nach einem der Ansprüche 1 bis 6, wobei im Ofen (56) Halogen-Strahler (57) angeordnet sind.

8. Vorrichtung nach einem der Ansprüche 1 bis 7, wobei das Tragorgan (59) ein Drehtisch mit einem Aufnahmeorgan (60) für jeweils einen Ausgabebehälter (61, 100) ist.

9. Vorrichtung nach einem der Ansprüche 1 bis 8, wobei in der Bahn des Ausgabebehälters (61, 100) zwischen dem Trichter (58) und der Entnahmeöffnung (66) Dosierorgane (67) zum Zudosieren von Gewürzen, insbesondere Ketchup, Mayonnaise und/oder Salz, angeordnet sind.
